# EUROPEAN PATENT APPLICATION

(11) **EP 4 738 752 A1**
(43) Date of publication of application: **06.05.2026**
(21) Application number: 25225766.2
(22) Date of filing: 20.02.2023
(51) Int. Cl.: H04L 5/00, H04W 36/00, H04W 36/08

(54) **COMMUNICATION METHOD AND APPARATUS**

(30) Priority: 04.03.2022 CN 202210211027
(62) Divisional of application: 23762752.6
(71) Applicant: Huawei Technologies Co., Ltd., Shenzhen, Guangdong 518129 (CN)
(72) Inventor: LI, Chenwan, Shenzhen, 518129 (CN); CHEN, Lei, Shenzhen, 518129 (CN); LI, Bingzhao, Shenzhen, 518129 (CN); SHI, Yulong, Shenzhen, 518129 (CN)
(74) Representative: Gill Jennings & Every LLP

(57) **Abstract**

This application provides a communication method and apparatus, to improve communication performance of a terminal device. The method includes: A terminal device camps on a first cell in an idle state or an inactive state; the terminal device measures the first cell based on a first NCD-SSB frequency, and measures a second cell based on the first NCD-SSB frequency and/or a CD-SSB frequency; and the terminal device performs cell reselection based on a measurement result of the first cell and a measurement result of the second cell. In this manner, when no CD-SSB frequency is configured or cell reselection cannot be performed based on the CD-SSB frequency, the terminal device can perform cell reselection based on the NCD-SSB frequency. In this manner, flexibility of the cell reselection can be improved, and further, communication performance of the terminal device can be improved.

## Description

### CROSS-REFERENCE TO RELATED APPLICATIONS

This application claims priority to Chinese Patent Application No. 202210211027.X, filed with the China National Intellectual Property Administration on March 4, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Currently, in a new radio system, a terminal device in an idle state can perform cell reselection based on a synchronization signal block (synchronization signal block, SSB). When the terminal device performs cell reselection based on the SSB, cell reselection is performed based on a cell defining synchronization signal/physical broadcast channel block (cell defining synchronization signal block, CD-SSB). However, there may be no CD-SSB on an initial bandwidth part (bandwidth part, BWP) of the terminal device. Consequently, the terminal device cannot normally perform cell reselection, and a problem such as communication interruption or poor communication quality is caused.

Therefore, how to improve communication performance of the terminal device becomes an urgent technical problem to be resolved.

### SUMMARY

This application provides a communication method and apparatus, to improve communication performance of a terminal device.

According to a first aspect, this application provides a communication method. The method may be performed by a terminal device, or may be performed by a chip or a circuit in a terminal device. Using the terminal device as an example, the terminal device camps on a first cell in an idle state or an inactive state, and the method includes: The terminal device measures the first cell based on a first NCD-SSB frequency, and measures a second cell based on the first NCD-SSB frequency and/or a CD-SSB frequency; and the terminal device performs cell reselection based on a measurement result of the first cell and a measurement result of the second cell.

This embodiment of this application provides an NCD-SSB frequency-based measurement manner, so that when no CD-SSB frequency is configured or cell reselection cannot be performed based on the CD-SSB frequency, the terminal device can perform cell reselection based on the NCD-SSB frequency. This can avoid a problem that communication performance of the terminal device is poor because cell reselection cannot be performed. Therefore, according to the method provided in this embodiment of this application, flexibility of the cell reselection can be improved, and further, the communication performance of the terminal device can be improved.

In a possible design, that the terminal device measures a second cell based on the first NCD-SSB frequency includes: The terminal device measures, based on first information from a network device, the second cell based on the first NCD-SSB frequency, where the first information indicates that the first NCD-SSB frequency can be used for neighboring cell measurement. In the foregoing manner, the terminal device can perform neighboring cell measurement based on an indication of the network device, so that flexibility of the cell reselection can be improved.

In a possible design, that the terminal device measures a second cell based on the first NCD-SSB frequency and a CD-SSB frequency includes: The terminal device measures the second cell based on the first NCD-SSB frequency; the terminal device determines, based on the measurement result of the second cell, that the second cell cannot be used as a target cell for reselection; and the terminal device measures the second cell based on the CD-SSB frequency. According to the foregoing design, when cell reselection cannot be performed based on the first NCD-SSB frequency, cell reselection can be performed based on the CD-SSB frequency, so that a problem that the communication performance of the terminal device is poor because cell reselection cannot be performed can be avoided.

In a possible design, before the terminal device measures the second cell based on the first NCD-SSB frequency, the method further includes: The terminal device receives second information from a network device, where the second information indicates that a neighboring cell is measured based on the CD-SSB frequency. In the foregoing manner, the terminal device can perform neighboring cell measurement based on an indication of the network device, so that the flexibility of the cell reselection can be improved.

In a possible design, that the terminal device measures a second cell based on a CD-SSB frequency includes: The terminal device measures, based on third information from a network device, the second cell based on the CD-SSB frequency, where the third information indicates that neighboring cell measurement can be performed only based on the CD-SSB frequency. In the foregoing manner, the terminal device can perform neighboring cell measurement based on an indication of the network device, so that the flexibility of the cell reselection can be improved.

In a possible design, before the terminal device measures a second cell based on the first NCD-SSB frequency and/or a CD-SSB frequency, the method further includes: The terminal device determines that the measurement result of the first cell satisfies a threshold corresponding to the first NCD-SSB frequency. The threshold corresponding to the first NCD-SSB frequency is configured by the network device, or the threshold corresponding to the first NCD-SSB frequency is determined based on a threshold corresponding to the CD-SSB frequency and a power compensation value of the first cell. In the foregoing design, impact of different transmit power on the cell reselection can be reduced by using the power compensation value. For example, it is assumed that transmit power of a reference signal of the first cell on the first NCD-SSB frequency is different from transmit power of a reference signal of the first cell on the CD-SSB frequency. Therefore, measurement results of the first cell determined by the terminal device based on the first NCD-SSB frequency and the CD-SSB frequency may be different, so that obtained cell reselection results may be different. In the foregoing manner, measurement results based on different frequencies may be aligned by using the power compensation value, so that accuracy of the cell reselection can be improved.

In a possible design, the method further includes: The terminal device receives fourth information from the network device, where the fourth information indicates the power compensation value of the first cell. According to this design, the terminal device can align the measurement results based on different frequencies, so that the accuracy of the cell reselection can be improved.

In a possible design, that the terminal device performs cell reselection based on a measurement result of the first cell and a measurement result of the second cell includes: The terminal device determines an R value of the first cell based on the measurement result of the first cell; the terminal device determines an R value of the second cell based on the measurement result of the second cell; and the terminal device performs cell reselection based on the R value of the first cell and the R value of the second cell.

In a possible design, that the terminal device determines an R value of the first cell based on the measurement result of the first cell includes: The terminal device determines the R value of the first cell based on the measurement result of the first cell and the power compensation value of the first cell. In the foregoing manner of the foregoing design, the measurement results based on different frequencies may be aligned by using the power compensation value, so that the impact of different transmit power on the cell reselection can be reduced, and the accuracy of the cell reselection can be improved.

In a possible design, that the terminal device determines an R value of the second cell based on the measurement result of the second cell includes: The terminal device determines the R value of the second cell based on the measurement result of the second cell and a power compensation value of the second cell. In the foregoing manner, the measurement results based on different frequencies may be aligned by using the power compensation value, so that the impact of different transmit power on the cell reselection can be reduced, and the accuracy of the cell reselection can be improved.

In a possible design, the method further includes: The terminal device receives fifth information from the network device, where the fifth information indicates the power compensation value of the second cell. In the foregoing design, the terminal device can align the measurement results of different frequencies based on the power compensation value.

According to a second aspect, this application provides a communication method. The method may be performed by a network device, or may be performed by a chip or a circuit in a network device. Using the network device as an example, the method includes: The network device determines indication information based on a configuration of an NCD-SSB frequency of a second cell, where the indication information indicates that a first NCD-SSB frequency and/or a CD-SSB frequency are/is used by a terminal device to measure the second cell, and the terminal device camps on a first cell in an idle state or an inactive state; and the network device sends the indication information to the terminal device.

This embodiment of this application provides an NCD-SSB frequency-based measurement manner, so that when no CD-SSB frequency is configured or cell reselection cannot be performed based on the CD-SSB frequency, the terminal device can perform cell reselection based on an indication of the network device. In this way, flexibility of the cell reselection can be improved, and further, communication performance of the terminal device can be improved.

In a possible design, that the indication information indicates that a first NCD-SSB frequency is used by a terminal device to measure the second cell specifically includes: The indication information indicates that the first NCD-SSB frequency can be used for neighboring cell measurement.

In this manner, the terminal device may measure a neighboring cell based on the first NCD-SSB frequency, and the terminal device does not need to switch a BWP due to the measurement. Therefore, power consumption of the terminal device can be reduced. For example, the terminal device may directly receive paging and initiate random access (random access channel, RACH) on a BWP including the first NCD-SSB frequency, instead of performing synchronization and measurement based on the CD-SSB frequency and then transferring to the BWP including the first NCD-SSB frequency to receive the paging and the RACH, so that faster access can be implemented, and frequent switching between different BWPs of the terminal device in the idle state can be reduced.

In a possible design, that the indication information indicates that a first NCD-SSB frequency and a CD-SSB frequency are used by a terminal device to measure the second cell specifically includes: The indication information indicates that a neighboring cell is measured based on the CD-SSB frequency.

In this manner, the neighboring cell for which the first NCD-SSB frequency is not configured can be measured, so that accuracy of a measurement result of the neighboring cell can be improved, and the terminal device can switch, through reselection, to a neighboring cell with better signal quality for communication, to improve the communication performance of the terminal device.

In a possible design, that the indication information indicates that a CD-SSB frequency is used by a terminal device to measure the second cell specifically includes: The indication information indicates that neighboring cell measurement can be performed only based on the CD-SSB frequency.

In this manner, the neighboring cell is measured based on the first NCD-SSB frequency and the CD-SSB frequency, so that the accuracy of the measurement result of the neighboring cell can be improved, and the terminal device can switch, through reselection, to a neighboring cell with a better signal quality for communication, to improve the communication performance of the terminal device.

In a possible design, the method further includes: The network device sends fourth information and/or fifth information to the terminal device, where the fourth information indicates a power compensation value of the first cell, and the fifth information indicates a power compensation value of the second cell. According to this design, the terminal device can align measurement results based on different frequencies, so that accuracy of the cell reselection can be improved.

According to a third aspect, this application further provides a communication apparatus. The communication apparatus has functions of implementing any method according to the first aspect. The communication apparatus may be implemented by hardware, or may be implemented by hardware executing corresponding software. The hardware or the software includes one or more units or modules corresponding to the foregoing functions.

In a possible design, the communication apparatus includes a processor. The processor is configured to support the communication apparatus in performing a corresponding function of the network device in the foregoing method. The communication apparatus may further include a memory. The memory may be coupled to the processor, and store program instructions and data that are necessary for the communication apparatus. Optionally, the communication apparatus further includes an interface circuit. The interface circuit is configured to support communication between the communication apparatus and a device such as the network device.

For example, the communication apparatus has a function of implementing the method according to the first aspect, and the processor is configured to: measure a first cell based on a first NCD-SSB frequency; measure a second cell based on the first NCD-SSB frequency and/or a CD-SSB frequency; and perform cell reselection based on a measurement result of the first cell and a measurement result of the second cell.

In a possible design, the communication apparatus includes corresponding functional modules for respectively implementing the steps in the foregoing method. The function may be implemented by hardware, or may be implemented by hardware executing corresponding software. The hardware or the software includes one or more modules corresponding to the foregoing functions.

In a possible design, a structure of the communication apparatus includes a processing unit (or a processing module) and a communication unit (or a communication module). These units may perform corresponding functions in the foregoing method examples. For details, refer to the descriptions in the method according to the first aspect, the third aspect, the fourth aspect, or the fifth aspect. Details are not described herein again.

For example, the communication apparatus has a function of implementing the method according to the first aspect, and the processing unit is configured to: measure a first cell based on a first NCD-SSB frequency; measure a second cell based on the first NCD-SSB frequency and/or a CD-SSB frequency; and perform cell reselection based on a measurement result of the first cell and a measurement result of the second cell.

According to a fourth aspect, this application further provides a communication apparatus. The communication apparatus has functions of implementing any method according to the second aspect. The communication apparatus may be implemented by hardware, or may be implemented by hardware executing corresponding software. The hardware or the software includes one or more units or modules corresponding to the foregoing functions.

In a possible design, the communication apparatus includes a processor. The processor is configured to support the communication apparatus in performing a corresponding function of the network device in the foregoing method. The communication apparatus may further include a memory. The memory may be coupled to the processor, and store program instructions and data that are necessary for the communication apparatus. Optionally, the communication apparatus further includes an interface circuit. The interface circuit is configured to support communication between the communication apparatus and a device such as a terminal device.

For example, the communication apparatus has a function of implementing the method according to the second aspect. The processor is configured to determine indication information based on a configuration of an NCD-SSB frequency of a second cell, where the indication information indicates that a first NCD-SSB frequency and/or a CD-SSB frequency are/is used by a terminal device to measure the second cell, and the terminal device camps on a first cell in an idle state or an inactive state. The transceiver is configured to send the indication information to the terminal device.

In a possible design, a structure of the communication apparatus includes a processing unit (or a processing module) and a communication unit (or a communication module). These units may perform corresponding functions in the foregoing method examples. For details, refer to the descriptions in the method according to the second aspect. Details are not described herein again.

For example, the communication apparatus has a function of implementing the method according to the second aspect. The processing unit is configured to determine indication information based on a configuration of an NCD-SSB frequency of a second cell, where the indication information indicates that a first NCD-SSB frequency and/or a CD-SSB frequency are/is used by a terminal device to measure the second cell, and the terminal device camps on a first cell in an idle state or an inactive state. The communication unit is configured to send the indication information to the terminal device.

According to a fifth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement any method according to the first aspect by using a logic circuit or by executing code instructions.

According to a sixth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in any one of the second aspect and the possible designs by using a logic circuit or executing code instructions.

According to a seventh aspect, a computer-readable storage medium is provided. The computer-readable storage medium stores a computer program or instructions. When the computer program or the instructions are executed by a processor, the method in any one of the first aspect to the second aspect and the possible designs is implemented.

According to an eighth aspect, a computer program product storing instructions is provided. When the instructions are run by a processor, the method in any one of the first aspect to the second aspect and the possible designs is implemented.

According to a ninth aspect, a chip system is provided. The chip system includes a processor, and may further include a memory, configured to implement the method in any one of the first aspect and the possible designs. The chip system may include a chip, or may include a chip and another discrete component.

According to a tenth aspect, a chip system is provided. The chip system includes a processor, and may further include a memory, configured to implement the method in any one of the second aspect and the possible designs. The chip system may include a chip, or may include a chip and another discrete component.

According to an eleventh aspect, a communication system is provided. The system includes the apparatus according to the first aspect and the apparatus according to the second aspect.

### BRIEF DESCRIPTION OF DRAWINGS

FIG. 1 is a diagram of an intra-frequency neighboring cell according to an embodiment of this application;
FIG. 2 is a diagram of an inter-frequency neighboring cell according to an embodiment of this application;
FIG. 3 is a schematic flowchart of cell reselection according to an embodiment of this application;
FIG. 4 is a diagram of a cell-dedicated bandwidth according to an embodiment of this application;
FIG. 5 is a diagram of a communication system according to an embodiment of this application;
FIG. 6 is a schematic flowchart of an intra-frequency cell reselection method according to an embodiment of this application;
FIG. 7 is a schematic flowchart of intra-frequency cell reselection according to an embodiment of this application;
FIG. 8 is a schematic flowchart of an inter-frequency cell reselection method according to an embodiment of this application;
FIG. 9 is a schematic flowchart of inter-frequency cell reselection according to an embodiment of this application;
FIG. 10 is a diagram of a structure of a communication apparatus according to an embodiment of this application; and
FIG. 11 is a diagram of a structure of a communication apparatus according to an embodiment of this application.

### DESCRIPTION OF EMBODIMENTS

The following further describes in detail this application with reference to accompanying drawings.

The following describes some terms in embodiments of this application, to facilitate understanding of a person skilled in the art.
1. A terminal device may be a device having a wireless transceiver function or a chip that can be disposed in any device, or may be referred to as user equipment (user equipment, UE), an access terminal, a subscriber unit, a subscriber station, a mobile station, a remote station, a remote terminal, a mobile device, a user terminal, a wireless communication device, a user agent, or a user apparatus. The terminal device in embodiments of this application may be a mobile phone (mobile phone), a tablet computer (Pad), a computer having the wireless transceiver function, an XR device (such as a VR device, an AR device, or an MR device), a wireless terminal in industrial control (industrial control), a wireless terminal in self driving (self driving), a wireless terminal in video surveillance, a wearable terminal device, or the like. Alternatively, the terminal device may be eMBB UE, URLLC UE, an uncrewed aerial vehicle, another internet of things (internet of things, IoT) device, a positioning device, the reduced capability terminal device described in the foregoing descriptions of the term 1, or the like.
   A network device may be an apparatus configured to implement a function of an access network device. The access network device may be a device that communicates with a wireless terminal device over an air interface in an access network by using one or more cells. For example, the access network device may be a next generation NodeB (next Generation NodeB, gNB) in an NR system, an evolved NodeB (evolutional NodeB, eNB) in a long term evolution (long term evolution, LTE) system, or the like. Alternatively, the network device may be an apparatus that can support the network device in implementing a function of an access network device, for example, a chip system. The apparatus may be installed in the network device.
2. A reduced capability (reduced capability, REDCAP) terminal device (REDCAP UE) includes REDCAP UE defined in 3GPP Rel-17 and REDCAP UE defined in 3GPP Rel-18, and specifically, may have at least one of the following features:
   (1) A maximum bandwidth at a frequency band (frequency range, FR) 1 during initial access and/or after initial access does not exceed 20 MHz. A maximum bandwidth at an FR 2 during initial access and/or after initial access does not exceed 100 MHz, and a maximum bandwidth supported by the REDCAP terminal device defined in 3GPP Rel-18 is 5 MHz.
   (2) A minimum quantity of supported receiving antenna (Rx) branches is 1.
   (3) A protocol version is NR Rel-17 or later.
   (4) Only half-duplex frequency division duplex (frequency division duplex, FDD) is supported.
   (5) If there is one Rx branch, one downlink (downlink, DL) maximum multiple-in multiple-out (multiple-in multiple-out, MIMO) layer is supported. If there are two Rx branches, two DL MIMO layers are supported.

The reduced capability terminal device may be understood as a terminal device with a reduced capability compared with a legacy terminal device (legacy UE). The capability includes but is not limited to features in the foregoing five aspects. The legacy terminal device may be, for example, an enhanced mobile broadband (enhanced Mobile Broadband, eMBB) terminal device or an ultra-reliable low-latency communication (ultra-reliable low-latency communication, URLLC) terminal device.

### 3. Criterion S

The criterion S means that a measurement value (referred to as a Srxlev value below) related to reference signal received power (reference signal received power, RSRP) of a cell on which a terminal device selects to camp should be greater than 0, and a measurement value (referred to as a Squal value below) related to reference signal received quality (reference signal received quality, RSRQ) should be greater than 0. That is, the terminal device selects a cell whose Srxlev value is greater than 0 and whose Squal value is greater than 0 to camp on.

The Srxlev value satisfies the following formula: Srxlev=Qrxlevmeas-(Qrxlevmin+Qrxlevminoffset)-Pcompensation-Qoffsettemp. Qrxlevmeas is a receive level value measured in the cell, Qrxlevmin is a minimum receive level value, Qrxlevminoffset is an offset of the minimum receive level value, and Pcompensation is equal to MAX(PEMAX-PUMAX, 0), where PEMAX is maximum available uplink transmit power configured by the terminal device, and PUMAX is maximum transmit power of the terminal device, and is determined by a capability level of the terminal device. Qoffsettemp is temporary power compensation.

The Squal value satisfies the following formula: Squal=Qqualmeas-(Qqualmin+Qqualminoffset)-Qoffsettemp, where Qqualmeas is a cell signal quality value measured in the cell; Qqualmin is a minimum signal quality value; Qqualminoffset is an offset of the minimum signal quality value; and Qoffsettemp is temporary power compensation.

### 4. Criterion R

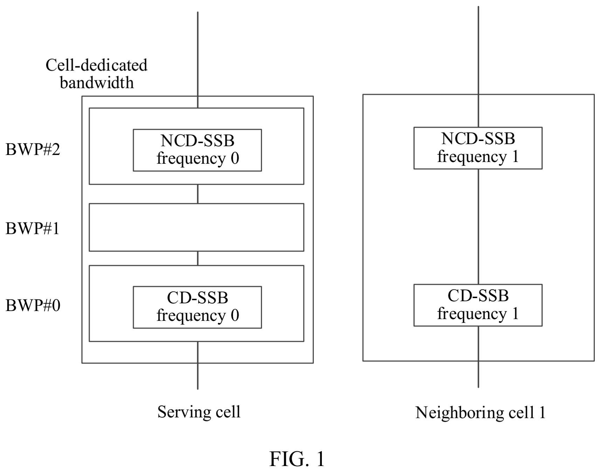

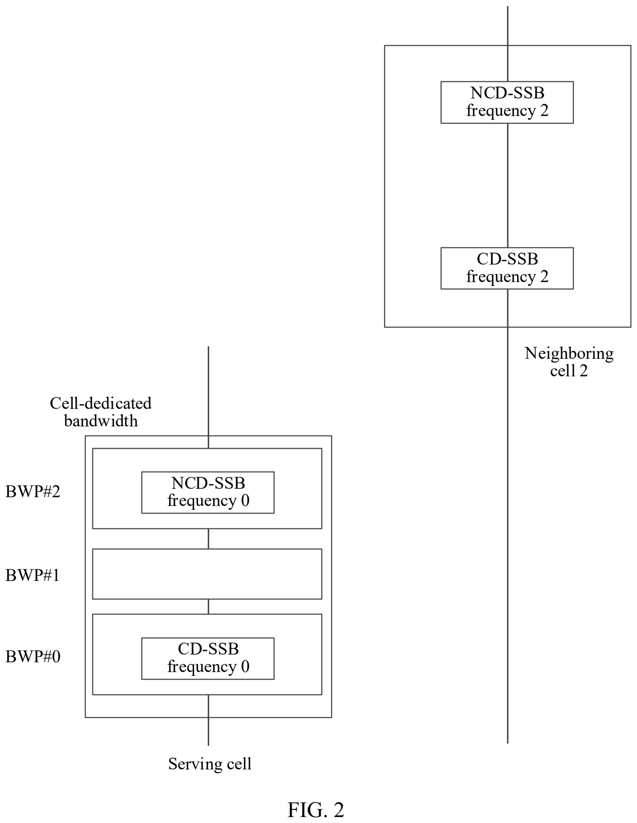

Cell reselection is a process in which a terminal device in an idle state monitors signal quality of a neighboring cell and a cell (referred to as a serving cell below) on which the terminal device currently camps, to select a best cell to provide a service signal. The neighboring cell may include an intra-frequency neighboring cell and an inter-frequency neighboring cell, and it is clear that the neighboring cell may also include other types of neighboring cells, which are not listed one by one herein. The intra-frequency neighboring cell is a neighboring cell that has a same center frequency as that of the serving cell. As shown in FIG. 1, the inter-frequency neighboring cell is a neighboring cell that has a different center frequency from that of the serving cell, as shown in FIG. 2. A process of performing cell reselection in the intra-frequency neighboring cell may be referred to as intra-frequency cell reselection, and a process of performing cell reselection in the inter-frequency neighboring cell may be referred to as inter-frequency cell reselection. For intra-frequency neighboring cells or inter-frequency neighboring cells with a same priority, the terminal device may perform reselection and sorting on the neighboring cells according to the criterion R.

The criterion R is for determining a target cell in the cell reselection process. The criterion R is as follows. If an R value of the neighboring cell is greater than an R value of the serving cell within detection time, the neighboring cell can be selected as a candidate cell for cell reselection. The R value of the neighboring cell satisfies the following formula: Rn=Qmeas,n-Qoffset-Qoffsettemp, where Rn is the R value of the neighboring cell, Qmeas,n is a measurement quantity of a signal of the neighboring cell, Qoffset is a cell offset, and Qoffsettemp is a temporary compensation value of the neighboring cell. In addition, the R value of the serving cell satisfies the following formula: Rs=Qmeas,s+Qhyst-Qoffsettemp, where Rs is the R value of the serving cell, Qmeas,s is a measurement quantity of a signal of the serving cell, Qhyst is a cell reselection hysteresis value, and Qoffsettemp is a temporary compensation value of the serving cell.

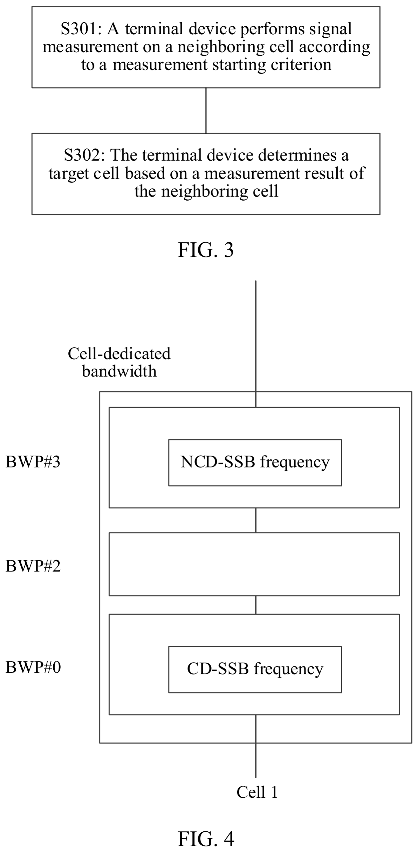

As shown in FIG. 3, a cell reselection process may include the following steps.

S301: A terminal device performs signal measurement on a neighboring cell according to a measurement starting criterion.

In an intra-frequency cell reselection process, a measurement starting criterion may be as follows. When a signal of a serving cell satisfies Srxlev>SIntraSearchP and Squal>SIntraSearchQ, the terminal device may not perform signal measurement on an intra-frequency neighboring cell. When a signal of a serving cell does not satisfy Srxlev>SIntraSearchP and Squal>SIntraSearchQ, the terminal device performs signal measurement on an intra-frequency neighboring cell. SIntraSearchP and SIntraSearchQ are thresholds for starting intra-frequency cell signal measurement, and may be broadcast by a network device by using a system message.

In an inter-frequency or inter-system cell reselection process, the network device may set a priority for each frequency. For a neighboring cell with a high-priority frequency, a priority of a frequency of the neighboring cell with the high-priority frequency is higher than a priority of a frequency of the serving cell, and the terminal device may always perform signal measurement on the neighboring cell. For a neighboring cell with a same-priority frequency and a neighboring cell with a low-priority frequency, a priority of a frequency of the neighboring cell with the same-priority frequency is equal to the priority of the frequency of the serving cell, and a priority of a frequency of the neighboring cell with the low-priority frequency is lower than the priority of the frequency of the serving cell. A measurement starting criterion may be as follows: When the signal of the serving cell satisfies Srxlev>SnonIntraSearchP and Squal>SnonIntraSearchQ, the terminal device may not perform signal measurement on these inter-frequency neighboring cells. When the signal of the serving cell does not satisfy Srxlev>SnonIntraSearchP and Squal>SnonIntraSearchQ, the terminal device may perform signal measurement on the inter-frequency neighboring cells. SnonIntraSearchP and SnonIntraSearchQ are thresholds for starting inter-frequency neighboring cell signal measurement, and may be broadcast by the network device by using a system message.

For Srxlev and Squal of the serving cell, refer to the related descriptions in the foregoing descriptions of the term 3. Details are not described herein again.

S302: The terminal device determines a target cell based on a measurement result of the neighboring cell.

In the intra-frequency cell reselection process, the terminal device may sort R values of candidate neighboring cells that satisfy a criterion R, and the terminal device may select a cell with a highest R value as the target cell.

In the inter-frequency cell reselection process, for the neighboring cell with the high-priority frequency, the terminal device may use, as a target cell, a neighboring cell with a highest-priority frequency in candidate neighboring cells that satisfy the following conditions, where the conditions include that both Srxlev and Squal of the neighboring cell satisfy corresponding thresholds respectively, and duration is greater than preset duration. The threshold is a threshold used for the neighboring cell to reselect the neighboring cell with the high-priority frequency.

If no neighboring cell with the high-priority frequency satisfies the cell reselection conditions, the terminal device may select the target cell from neighboring cells with the same-priority frequency, the terminal device may sort R values of candidate neighboring cells that satisfy a criterion R, and the terminal device may select a cell with a highest R value as the target cell.

If no neighboring cell with the high-priority frequency and no neighboring cell with the same-priority frequency satisfy the cell reselection conditions, the terminal device may select the target cell from neighboring cells with the low-priority frequency. For the neighboring cell with the low-priority frequency, if both Srxlev and Squal of the serving cell are less than corresponding thresholds respectively, where the threshold is a threshold used for the serving cell to reselect the neighboring cell with the low-priority frequency, and both Srxlev and Squal of the neighboring cell are greater than corresponding thresholds respectively, where the threshold is a threshold used for the neighboring cell to reselect the neighboring cell with the low-priority frequency, and duration is greater than preset duration.

### 5. CD-SSB

The CD-SSB is an SSB associated with a system information block (system information block, SIB) 1. For example, the CD-SSB is an SSB that is capable of configuring necessary information of a cell (for example, a control-resource set (control-resource set, CORESET) #0 and/or the SIB 1). The CORESET#0 may be used by a terminal device to parse the SIB 1, and the SIB 1 is a SIB for providing cell feature information. For example, the SIB 1 includes system information of a non-access (non-access, NAS) layer. In addition, the CD-SSB frequency in this application is a frequency of the CD-SSB, to be specific, a frequency location corresponding to the CD-SSB.

### 6. NCD-SSB

The NCD-SSB is an SSB that is not associated with a SIB 1. For example, the NCD-SSB lacks complete information for configuring a cell. For example, the NCD-SSB includes only the SSB, or lacks a necessary field of the SIB 1. In addition, the NCD-SSB frequency in this application is a frequency of the NCD-SSB, to be specific, a frequency location corresponding to the NCD-SSB.

In embodiments of this application, the terms "system" and "network" may be used interchangeably. "At least one" means one or more, and "a plurality of" means two or more. "And/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

In addition, unless otherwise stated, ordinal numbers such as "first" and "second" in embodiments of this application are used to distinguish between a plurality of objects, but are not intended to limit sizes, content, a sequence, a time sequence, priorities, importance, or the like of the plurality of objects. For example, first information and second information are merely used to distinguish between different information, and do not indicate different content, priorities, importance, or the like of the two pieces of information.

The foregoing describes concepts of some names used in embodiments of this application. The following describes technical features of embodiments of this application.

Currently, measurement based on an SSB is agreed with in a 5G standard. A terminal device in an idle state may perform cell reselection based on the SSB. Currently, when the terminal device performs cell reselection based on the SSB, cell reselection is performed based on a CD-SSB frequency. However, there may be no CD-SSB on an initial BWP of the terminal device. Consequently, the terminal device cannot normally perform cell reselection, and a problem such as communication interruption or poor communication quality is caused. For example, in a current discussion for RedCap UE, it is supported to set a bandwidth part (bandwidth part, BWP) dedicated to the RedCap UE at an edge of a carrier. The BWP dedicated to the RedCap UE includes but is not limited to an initial (initial) BWP dedicated to the RedCap UE. For example, the BWP dedicated to the RedCap UE may include an initial uplink (uplink, UL) BWP and an initial downlink (downlink, DL) BWP, where a center frequency of the initial uplink BWP is the same as a center frequency of the initial downlink BWP. In addition, considering that current time division duplexing (time division duplexing, TDD) UE has only one phase-locked loop, the current BWP dedicated to the RedCap UE may not be configured with a CD-SSB frequency. For example, as shown in FIG. 4, a cell 1 includes a BWP#0, a BWP#2, and a BWP#3. The BWP#0 includes a CD-SSB, the BWP#2 includes neither a CD-SSB nor an NCD-SSB, and the BWP#3 includes an NCD-SSB but does not include a CD-SSB. If an initial BWP of a terminal device is configured as the BWP#2 or the BWP#3, there is no CD-SSB in the initial BWP of the terminal device. In this scenario, the terminal device cannot perform cell reselection based on a CD-SSB frequency. Consequently, communication quality of the terminal device is poor, and even communication interruption occurs.

Therefore, how to improve communication performance of the terminal device becomes an urgent technical problem to be resolved.

Based on this, embodiments of this application provide a communication method and apparatus, to improve the communication performance of the terminal device. The method and the apparatus are based on a same inventive concept. Because the method and the apparatus have a similar problem-resolving principle, for implementations of the apparatus and the method, refer to each other, and repeated parts are not described again.

The communication method according to this application may be applied to various communication systems, for example, internet of things (internet of things, IoT), narrowband internet of things (narrowband internet of things, NB-IoT), LTE, a 5th generation (5G) communication system, an LTE and 5G hybrid architecture, a 5G new radio (new radio, NR) system, and a 6G system or a new communication system emerging in future communication development.

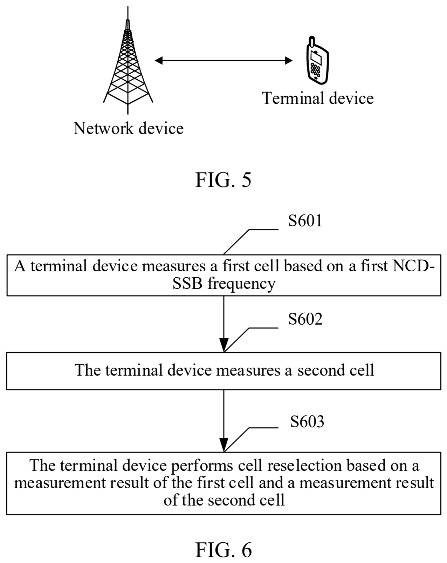

FIG. 5 shows an architecture of a communication system to which a communication method according to an embodiment of this application is applicable. The architecture of the communication system may include a network device and a terminal device.

A network architecture and a service scenario that are described in embodiments of this application are intended to describe the technical solutions in embodiments of this application more clearly, and do not constitute a limitation on the technical solutions according to embodiments of this application. A person of ordinary skill in the art may know that, with evolution of the network architecture and emergence of a new service scenario, the technical solutions according to embodiments of this application are also applicable to a similar technical problem.

The following describes the technical solutions in embodiments of this application with reference to the accompanying drawings in embodiments of this application.

The method according to this application may be applied to a terminal device, and the terminal device camps on a first cell in an idle state or an inactive state. The following separately describes an intra-frequency cell reselection method and an inter-frequency cell reselection method of the terminal device.

FIG. 6 is a schematic flowchart of an intra-frequency cell reselection method according to this application. The method includes the following steps.

S601: A terminal device measures a first cell based on a first NCD-SSB frequency.

It should be understood that S601 is merely a possible implementation of measuring the first cell by the terminal device. In specific implementation, the first cell may be measured in another manner. For example, the terminal device may alternatively measure the first cell based on a CD-SSB frequency, to obtain a second measurement result. For another example, the terminal device may measure the first cell based on a first NCD-SSB frequency and a CD-SSB frequency. The terminal device determines a measurement result of the first cell based on a first measurement result and the second measurement result.

To distinguish between the foregoing implementations, the implementation of measuring the first cell based on the first NCD-SSB frequency may be referred to as Manner 1.1, the implementation of measuring the first cell based on the CD-SSB frequency may be referred to as Manner 1.2, and the implementation of measuring the first cell based on the first NCD-SSB frequency and the CD-SSB frequency may be referred to as Manner 1.3.

In a possible implementation solution of Manner 1.3, the terminal device may use, as the measurement result of the first cell, an average value of the first measurement result obtained by measuring the first cell based on the first NCD-SSB frequency and the second measurement result obtained by measuring the first cell based on the CD-SSB frequency.

In another possible implementation solution of Manner 1.3, the terminal device may use, as the measurement result of the first cell, a weighted sum of the first measurement result obtained by measuring the first cell based on the first NCD-SSB frequency and the second measurement result obtained by measuring the first cell based on the CD-SSB frequency.

In a possible implementation, before step S602, the terminal device may determine that the measurement result of the first cell satisfies a threshold corresponding to the first NCD-SSB frequency. The threshold corresponding to the first NCD-SSB frequency is configured by a network device, or the threshold corresponding to the first NCD-SSB frequency is determined based on a threshold corresponding to the CD-SSB frequency and a power compensation value of the first cell.

For example, the terminal device may perform the following step S602 when determining that the measurement result of the first cell satisfies the following formulas:
Srxlev_{NCD-SSB}≤SIntraSearchP_{NCD-SSB}, and Squal_{NCD-SSB}≤SIntraSearchQ_{NCD-SSB}, where Srxlev_{NCD-SSB} and Squal_{NCD-SSB} are determined based on the measurement result of the first cell, SIntraSearchP_{NCD-SSB} and SIntraSearchQ_{NCD-SSB} are thresholds corresponding to a first NCD-SSB for starting intra-frequency cell signal measurement, and SIntraSearchP_{NCD-SSB} and SIntraSearchQ_{NCD-SSB} are configured by the network device. For example, the network device may broadcast, by using a system message such as a SIB 1, the thresholds SIntraSearchP_{NCD-SSB} and SIntraSearchQ_{NCD-SSB} that correspond to the first NCD-SSB and that are for starting the intra-frequency cell signal measurement.

For another example, the terminal device may perform the following step S602 when determining that the measurement result of the first cell satisfies the following formulas:
Srxlev_{NCD-SSB}+offset1≤SIntraSearchP_{CD-SSB} and Squal_{NCD-SSB}+offset1≤SIntraSearchQ_{CD-SSB}; or Srxlev_{NCD-SSB}≤SIntraSearchP_{CD-SSB}-offset1, and Squal_{NCD-SSB}≤SIntraSearchQ_{CD-SSB}-offset1.

Srxlev_{NCD-SSB} and Squal_{NCD-SSB} are determined based on the measurement result of the first cell, SIntraSearchP_{CD-SSB} and SIntraSearchQ_{CD-SSB} are thresholds corresponding to a CD-SSB for starting intra-frequency cell signal measurement, and SIntraSearchP_{CD-SSB} and SIntraSearchQ_{CD-SSB} are configured by the network device. For example, the network device may broadcast, by using a system message such as a SIB 1, the thresholds SIntraSearchP_{CD-SSB} and SIntraSearchQ_{CD-SSB} that correspond to the CD-SSB and that are for starting the intra-frequency cell signal measurement. offset is the power compensation value of the first cell. Optionally, offset may include a power compensation value corresponding to RSRP and/or a power compensation value corresponding to RSRQ. A power offset corresponding to the RSRP and a power offset corresponding to the RSRQ may be a same power offset, or may be different power offsets. This is not specifically limited herein.

For a manner of determining Srxlev_{NCD-SSB} and Squal_{NCD-SSB}, refer to the manner of determining Srxlev and Squal in the foregoing descriptions of the term 3. Details are not described herein again.

S602: The terminal device measures a second cell.

In an implementation, the terminal device may measure one or more neighboring cells, and the second cell is any one of the one or more neighboring cells. In this embodiment of this application, the second cell is used as an example to describe a manner of measuring the neighboring cell by the terminal device. For a manner of measuring another neighboring cell, refer to a manner of measuring the second cell.

Specifically, the terminal device may measure the second cell in any one of the following three manners.

Manner 2.1: The terminal device may measure the second cell based on the first NCD-SSB frequency. In this manner, the terminal device may measure a neighboring cell based on the first NCD-SSB frequency, and the terminal device does not need to switch a BWP due to measurement. Therefore, power consumption of the terminal device can be reduced. For example, the terminal device may directly receive paging and initiate an RACH on a BWP including the first NCD-SSB frequency, instead of performing synchronization and measurement based on the CD-SSB frequency and then transferring to the BWP including the first NCD-SSB frequency to receive the paging and the RACH, so that faster access can be implemented, and frequent switching between different BWPs of the terminal device in an idle state can be reduced.

Manner 2.2: The terminal device may alternatively measure the second cell based on the CD-SSB frequency. In this manner, a neighboring cell for which the first NCD-SSB frequency is not configured can be measured, so that accuracy of a measurement result of the neighboring cell can be improved, and the terminal device can switch, through reselection, to a neighboring cell with better signal quality for communication, to improve communication performance of the terminal device.

Manner 2.3: The terminal device may measure the second cell based on the first NCD-SSB frequency and the CD-SSB frequency. In this manner, the neighboring cell is measured based on the first NCD-SSB frequency and the CD-SSB frequency, so that the accuracy of a measurement result of the neighboring cell can be improved, and the terminal device can switch, through reselection, to a neighboring cell with a better signal quality for communication, to improve communication performance of the terminal device.

For example, the terminal device may measure the second cell based on the first NCD-SSB frequency to obtain a third measurement result, and measure the second cell based on the CD-SSB frequency to obtain a fourth measurement result. The terminal device determines a measurement result of the second cell based on the third measurement result and the fourth measurement result. For example, an average value of the third measurement result and the fourth measurement result may be used as the measurement result of the second cell. Alternatively, a weighted sum of the third measurement result and the fourth measurement result may be used as the measurement result of the first cell.

For another example, the terminal device may measure, based on the first NCD-SSB frequency, a plurality of neighboring cells including the second cell. If the terminal device determines, based on measurement results of the plurality of neighboring cells, that the plurality of neighboring cells cannot be used as target cells for reselection, or no neighboring cell is detected on the frequency, the terminal device measures the plurality of neighboring cells based on the CD-SSB frequency.

For still another example, the terminal device may measure at least one first neighboring cell based on the first NCD-SSB frequency, and measure at least one second neighboring cell based on the CD-SSB frequency. The second cell may belong to the first neighboring cell, or may belong to the second neighboring cell.

In an implementation, the terminal device may alternatively determine, based on an indication of the network device, to measure the second cell in Manner 2.1, Manner 2.2, or Manner 2.3. For example, the network device may determine, based on a configuration of an NCD-SSB frequency of the second cell, a frequency used by the terminal device to measure the second cell.

For example, the network device sends first information to the terminal device. The first information indicates that the first NCD-SSB frequency can be used for neighboring cell measurement, or the first information indicates that neighboring cell measurement is performed based on the first NCD-SSB frequency, or the first information indicates that there are plenty of neighboring cells on the first NCD-SSB frequency for cell reselection, or the first information indicates that neighboring cell measurement may be performed only based on the first NCD-SSB frequency. Correspondingly, the terminal device may measure the second cell based on the first information in Manner 2.1.

For another example, the network device sends second information to the terminal device. The second information indicates that the neighboring cell is measured based on the CD-SSB frequency, or the second information indicates that the neighboring cell is measured with reference to the CD-SSB frequency, or the second information indicates that the first NCD-SSB frequency and the CD-SSB frequency are used during neighboring cell measurement, or the second information indicates that the CD-SSB may be used for neighboring cell measurement, or neighboring cell measurement is performed only based on the CD-SSB. Correspondingly, the terminal device may measure the second cell based on the second information in Manner 2.3.

For still another example, the network device sends third information to the terminal device. The third information indicates that neighboring cell measurement can be performed only based on the CD-SSB frequency. Correspondingly, the terminal device may measure the second cell based on the third information in Manner 2.2. In an example description, the "neighboring cell measurement can be performed only based on the CD-SSB frequency" may be understood as that the neighboring cell can be measured only based on the CD-SSB frequency when the neighboring cell is measured.

In another implementation, the terminal device may alternatively autonomously determine a manner of measuring the neighboring cell. For example, the terminal device may measure, based on the first NCD-SSB frequency, the plurality of neighboring cells including the second cell. If the plurality of neighboring cells cannot be used as the target cells for reselection, the terminal device measures the plurality of neighboring cells based on the CD-SSB frequency.

S603: The terminal device performs cell reselection based on the measurement result of the first cell and the measurement result of the second cell.

In an implementation, the terminal device may determine an R value of the first cell based on the measurement result of the first cell, and determine an R value of the second cell based on the measurement result of the second cell. The terminal device performs cell reselection based on the R value of the first cell and the R value of the second cell.

Optionally, when determining the R value of the first cell, the terminal device may determine the R value of the first cell based on the measurement result of the first cell and the power compensation value of the first cell. For example, Rs=Qmeas,s+Qhyst-Qoffsettemp+offset1. For meanings of Rs, Qmeas,s, Qhyst and Qoffsettemp, refer to the related descriptions in the foregoing descriptions of the term 4, and offset1 is a power offset corresponding to the first cell.

In an implementation, the power compensation value of the first cell may be broadcast by the network device. For example, the network device may broadcast the power compensation value of the first cell when power of a reference signal of the first cell on the first NCD-SSB frequency is different from power of a reference signal of the first cell on the CD-SSB frequency.

In the foregoing manner, impact of different transmit power on the cell reselection can be reduced by using the power compensation value. For example, it is assumed that transmit power of the reference signal of the first cell on the first NCD-SSB frequency is different from transmit power of the reference signal of the first cell on the CD-SSB frequency. Therefore, measurement results of the first cell determined by the terminal device based on the first NCD-SSB frequency and the CD-SSB frequency may be different, so that obtained cell reselection results may be different. In the foregoing manner, measurement results based on different frequencies may be aligned by using the power compensation value, so that accuracy of the cell reselection can be improved.

Optionally, when determining the R value of the second cell, the terminal device may determine the R value of the second cell based on the measurement result of the second cell and a power compensation value of the second cell. For example, Rn=Qmeas,n-Qoffset-Qoffsettemp+offset2. For meanings of Rn, Qmeas,n, Qoffset and Qoffsettemp, refer to the related descriptions in the foregoing descriptions of the term 4, and offset2 is a power offset corresponding to the second cell.

In an implementation, the power compensation value of the second cell may be broadcast by the network device. For example, if the terminal device measures the second cell in the manner a or the manner c, the network device may broadcast the power compensation value of the second cell when power of a reference signal of the second cell on the first NCD-SSB frequency is different from power of a reference signal of the second cell on the CD-SSB frequency.

In the foregoing manner, measurement results based on different frequencies may be aligned by using the power compensation value, so that impact of different transmit power on the cell reselection can be reduced, and accuracy of the cell reselection can be improved. For example, after switching, through reselection, to the second cell, the terminal device may camp on another frequency of the second cell, for example, the CD-SSB frequency. In the foregoing design, the measurement results based on different frequencies may be aligned by using the power compensation value, so that the accuracy of the cell reselection can be improved.

Optionally, the network device may configure at least one NCD-SSB frequency in the system message. In specific implementation, the network device may explicitly or implicitly indicate a cell corresponding to the NCD-SSB frequency.

In an implementation, the network device may indicate, based on a CD-SSB frequency associated with the NCD-SSB frequency, the cell corresponding to the NCD-SSB frequency. Specifically, the network device may explicitly or implicitly indicate an association relationship between the NCD-SSB frequency and the CD-SSB frequency. For example, the network device may indicate the CD-SSB frequency associated with the NCD-SSB frequency by using a sequence number of the frequency. For example, if a sequence number of a second NCD-SSB frequency in an NCD-SSB frequency list is 3, there is an association relationship between the second NCD-SSB frequency and a CD-SSB frequency whose sequence number is 3 in a CD-SSB frequency list.

In another implementation, the network device may broadcast an NCD-SSB frequency list. The NCD-SSB frequency list includes at least one NCD-SSB frequency and a physical cell identifier (physical cell identifier, PCI) corresponding to each NCD-SSB frequency. NCD-SSB frequencies associated with a same PCI belong to a same cell.

In another implementation, the network device may broadcast a neighboring cell list. The neighboring cell list includes at least one neighboring cell, and optionally includes an NCD-SSB frequency and/or a CD-SSB frequency corresponding to each neighboring cell. In other words, a configuration of each neighboring cell includes the corresponding NCD-SSB frequency and/or CD-SSB frequency. In a possible implementation, for an intra-frequency neighboring cell, the network device may not indicate a CD-SSB frequency of the neighboring cell.

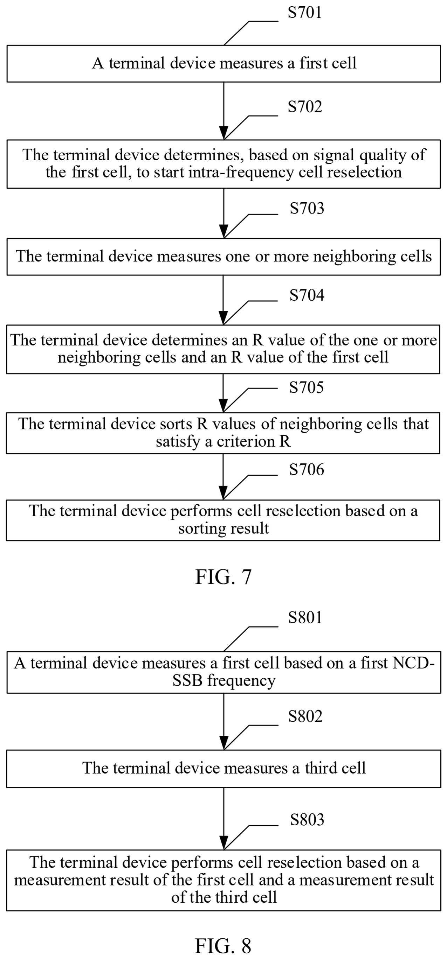

For ease of understanding of the solution, the following describes an intra-frequency cell reselection process of a terminal device, as shown in FIG. 7.

S701: The terminal device measures a first cell.

Specifically, for a manner of measuring the first cell by the terminal device, refer to Manner 1.1 to Manner 1.3. Details are not described herein again.

S702: The terminal device determines, based on signal quality of the first cell, to start intra-frequency cell reselection.

In an implementation, if the terminal device performs signal measurement on the first cell based on a CD-SSB frequency, that is, Manner 1.1 is used, the terminal device may determine to start the intra-frequency cell reselection when the signal quality of the first cell satisfies the following formulas: Srxlev_{CD-SSB}≤SIntraSearchP_{CD-SSB} and Squal_{CD-SSB}≤SIntraSearchQ_{CD-SSB}.

Srxlev_{CD-SSB} and Squal_{CD-SSB} are determined based on a result of measuring the first cell based on the CD-SSB frequency. For details, refer to the manner of determining Srxlev and Squal in the foregoing descriptions of the term 3. Details are not described herein again. SIntraSearchP_{CD-SSB} and SIntraSearchQ_{CD-SSB} are thresholds corresponding to the CD-SSB frequency for starting intra-frequency cell signal measurement, and may be broadcast by a network device by using a system message.

In another implementation, if the terminal device performs signal measurement on the first cell based on a first NCD-SSB frequency, that is, Manner 1.2 is used, the terminal device may determine to start the intra-frequency cell reselection when the signal quality of the first cell satisfies the following formulas: Srxlev_{NCD-SSB}≤SIntraSearchP_{NCD-SSB} and Squal_{NCD-SSB}≤SIntraSearchQ_{NCD-SSB}. SIntraSearchP_{NCD-SSB} and SIntraSearchQ_{NCD-SSB} are thresholds corresponding to the first NCD-SSB frequency for starting intra-frequency cell signal measurement, and may be broadcast by a network device by using a system message.

Alternatively, the terminal device may determine to start the intra-frequency cell reselection when the signal quality of the first cell satisfies the following formulas: Srxlev_{NCD-SSB}+offset1≤SIntraSearchP_{CD-SSB} and Squal_{NCD-SSB}+offset1≤SIntraSearchQ_{CD-SSB}; or Srxlev_{NCD-SSB}≤SIntraSearchP_{CD-SSB}-offset1, and Squal_{NCD-SSB}≤SIntraSearchQ_{CD-SSB}-offset1.

Srxlev_{NCD-SSB} and Squal_{NCD-SSB} are determined based on a result of measuring the first cell based on the first NCD-SSB frequency. For details, refer to the manner of determining Srxlev and Squal in the foregoing descriptions of the term 3. Details are not described herein again.

In still another implementation, if the terminal device performs signal measurement on the first cell based on a first NCD-SSB frequency and a CD-SSB frequency, that is, Manner 1.2 is used, the terminal device may determine to start the intra-frequency cell reselection when the signal quality of the first cell satisfies the following formulas: (Srxlev_{CD-SSB}+Srxlev_{NCD-SSB}+offset1)/2≤SIntraSearchP_{CD-SSB} and (Squal_{CD-SSB}+Squal_{NCD-SSB}+offset1)/2≤SIntraSearchQ_{CD-SSB}.

Optionally, the network device may send a power compensation value of the first cell when transmit power of a reference signal of the first cell on the first NCD-SSB frequency is different from transmit power of a reference signal of the first cell on the CD-SSB frequency.

S703: The terminal device measures one or more neighboring cells.

The one or more neighboring cells include the second cell described above.

Specifically, for a manner of measuring the one or more neighboring cells by the terminal device, refer to the related descriptions of S602. Details are not described herein again.

S704: The terminal device determines an R value of the one or more neighboring cells and an R value of the first cell.

In an implementation, the second cell in the one or more neighboring cells is used as an example. If measuring the second cell based on the first NCD-SSB frequency, the terminal device may determine an R value of the second cell based on a result of measuring the second cell based on the first NCD-SSB frequency and a power compensation value of the second cell. For example, an example in which the second cell is measured in Manner 2.1 is used. The R value of the second cell may satisfy the following condition: Rn=Qmeas,n-Qoffset-Qoffsettemp+offset2. For meanings of Rn, Qmeas,n, Qoffset and Qoffsettemp, refer to the related descriptions in the foregoing descriptions of the term 4, and offset2 is a power offset corresponding to the second cell.

Optionally, in step S701, if measuring the first cell based on the first NCD-SSB frequency, the terminal device may determine the R value of the first cell based on the result of measuring the first cell based on the first NCD-SSB frequency and the power compensation value of the first cell. For example, an example in which the first cell is measured in Manner 1.1 is used. The R value of the first cell may satisfy the following condition: Rs=Qmeas,s+Qhyst-Qoffsettemp+offset1. For meanings of Rs, Qmeas,s, Qhyst and Qoffsettemp, refer to the related descriptions in the foregoing descriptions of the term 4, and offset1 is a power offset corresponding to the first cell.

S705: The terminal device sorts R values of neighboring cells that satisfy a criterion R.

S706: The terminal device performs cell reselection based on a sorting result.

This embodiment of this application provides an NCD-SSB frequency-based measurement manner, so that when performing cell reselection in the intra-frequency neighboring cell, the terminal device can perform cell reselection based on the NCD-SSB frequency when no CD-SSB frequency is configured or cell reselection cannot be performed based on the CD-SSB frequency. This can avoid a problem that communication performance of the terminal device is poor because cell reselection cannot be performed. Therefore, according to the method provided in this embodiment of this application, flexibility of the cell reselection can be improved, and further, the communication performance of the terminal device can be improved.

In addition, the terminal device may measure the intra-frequency neighboring cell based on the NCD-SSB frequency, and the terminal device does not need to switch a BWP due to the measurement. Therefore, power consumption of the terminal device can be reduced. For example, the terminal device may directly receive paging and initiate an RACH on a BWP including the NCD-SSB frequency, instead of performing synchronization and measurement based on the CD-SSB frequency and then transferring to a BWP including the first NCD-SSB frequency to receive the paging and the RACH, so that faster access can be implemented, and frequent switching between different BWPs of the terminal device in an idle state can be reduced.

In addition, in this embodiment of this application, impact of different transmit power on the cell reselection can be reduced by using the power compensation value.

The intra-frequency cell reselection method is described above, and the following describes an inter-frequency cell reselection method. In the inter-frequency cell reselection method, for a neighboring cell with a same-priority frequency, the cell reselection method is similar to the intra-frequency cell reselection methods described in FIG. 6 and FIG. 7. A difference lies in that in the intra-frequency cell reselection method, the threshold for starting the intra-frequency cell signal measurement is used when the terminal device starts the intra-frequency cell reselection, while in the inter-frequency cell reselection method, a threshold for starting inter-frequency cell signal measurement is used when the terminal device starts inter-frequency cell reselection. For details, refer to the intra-frequency cell reselection methods described in FIG. 6 and FIG. 7, and repeated parts are not described again.

In the inter-frequency cell reselection method for the cell reselection method for a neighboring cell with a high-priority frequency, refer to the cell reselection method for the neighboring cell with the high-priority frequency in the inter-frequency cell reselection process in S302 in the foregoing descriptions of the term 4. For the cell reselection method for a neighboring cell with a low-priority frequency, refer to the cell reselection method for the neighboring cell with the low-priority frequency in the inter-frequency cell reselection process in S302 in the foregoing descriptions of the term 4.

The following describes the inter-frequency cell reselection method. As shown in FIG. 8, the inter-frequency cell reselection method includes the following steps.

S801: A terminal device measures a first cell based on a first NCD-SSB frequency.

For S801, refer to the related descriptions of S601. Details are not described herein again.

In a possible implementation, before step S801, the terminal device may determine that a measurement result of the first cell satisfies a threshold corresponding to the first NCD-SSB frequency. The threshold corresponding to the first NCD-SSB frequency is configured by a network device, or the threshold corresponding to the first NCD-SSB frequency is determined based on a threshold corresponding to a CD-SSB frequency and a power compensation value of the first cell. It should be noted that the threshold corresponding to the first NCD-SSB frequency in S801 may be different from the threshold corresponding to the first NCD-SSB frequency in S601. The threshold corresponding to the first NCD-SSB frequency in S601 is a threshold for starting intra-frequency cell reselection, and the threshold corresponding to the first NCD-SSB frequency in S801 is a threshold for starting inter-frequency cell reselection.

Specifically, for a manner in which the terminal device determines that the measurement result of the first cell satisfies the threshold corresponding to the first NCD-SSB frequency, refer to the foregoing descriptions, and repeated parts are not described again.

S802: The terminal device measures a third cell.

In an implementation, the terminal device may measure one or more neighboring cells, and the third cell is any one of the one or more neighboring cells. In this embodiment of this application, the third cell is used as an example to describe a manner of measuring the neighboring cell by the terminal device. For a manner of measuring another neighboring cell, refer to a manner of measuring the third cell.

S802 is similar to S602, but a difference lies in that in S602, the first NCD-SSB frequency is used by the terminal device to measure the second cell based on the NCD-SSB frequency, while in S802, a second NCD-SSB frequency is used by the terminal device to measure the third cell based on the NCD-SSB frequency. For S802, refer to the related descriptions of S602, and repeated parts are not described again.

Optionally, S802 may be further implemented in the following manner: The terminal device may measure the third cell based on the CD-SSB frequency by default.

S803: The terminal device performs cell reselection based on the measurement result of the first cell and a measurement result of the third cell.

S803 is similar to S603. For details, refer to the related descriptions of S603. Details are not described herein again.

In a possible implementation, if the measurement result of the first cell obtained by the terminal device based on the first NCD-SSB frequency is less than a first threshold, or a result determined based on the measurement result based on the first NCD-SSB frequency and a power compensation value of the first cell is less than a first threshold, the terminal device may fall back to camp on the CD-SSB frequency, and perform cell reselection based on the CD-SSB frequency. The first threshold may be a threshold for starting inter-frequency cell reselection, or the first threshold is different from a threshold for starting inter-frequency cell reselection.

In an implementation, the power compensation value of the first cell may be broadcast by the network device. For example, the network device may broadcast the power compensation value of the first cell when power of a reference signal of the first cell on the first NCD-SSB frequency is different from power of a reference signal of the first cell on the CD-SSB frequency.

In an implementation, a power compensation value of the third cell may be broadcast by the network device. For example, the network device may broadcast the power compensation value of the third cell when power of a reference signal of the third cell on the first NCD-SSB frequency is different from power of a reference signal of the third cell on the CD-SSB frequency.

Optionally, the network device may configure at least one NCD-SSB frequency in a system message. In specific implementation, the network device may explicitly or implicitly indicate a cell corresponding to the NCD-SSB frequency. For a specific indication manner, refer to the related descriptions of the at least one NCD-SSB frequency configured for intra-frequency cell reselection, and details are not described herein again.

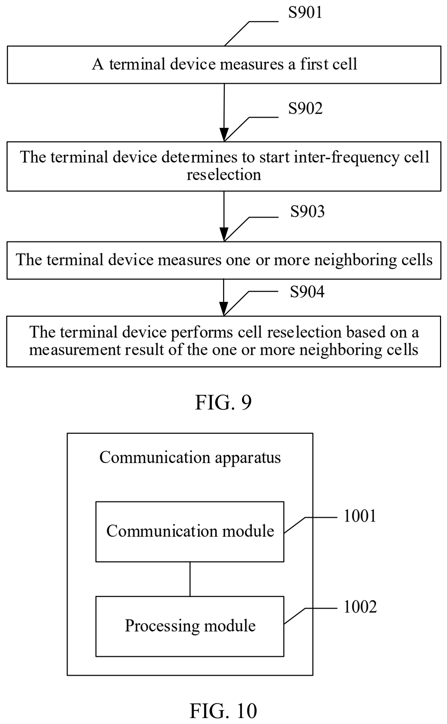

For ease of understanding of the solution, the following describes an inter-frequency cell reselection process of a terminal device, as shown in FIG. 9.

S901: The terminal device measures a first cell.

Specifically, for a manner of measuring the first cell by the terminal device, refer to the related descriptions of S801. Details are not described herein again.

S902: The terminal device determines to start inter-frequency cell reselection.

For neighboring cells with a high-priority frequency, the terminal device may always perform signal measurement on these neighboring cells.

For determining to start the inter-frequency cell reselection for a neighboring cell with a same-priority frequency and a neighboring cell with a low-priority frequency, refer to the related descriptions of S702. A difference lies in that the threshold for determining to start the intra-frequency cell reselection is used in S702, while a threshold for starting the inter-frequency cell signal measurement is used in S902.

Optionally, a network device may send a power compensation value of the first cell when transmit power of a reference signal of the first cell on a first NCD-SSB frequency is different from transmit power of a reference signal of the first cell on a CD-SSB frequency.

S903: The terminal device measures one or more neighboring cells.

The one or more neighboring cells include the third cell described above.

Specifically, for a manner of measuring the one or more neighboring cells by the terminal device, refer to the related descriptions of S802. Details are not described herein again.

S904: The terminal device performs cell reselection based on a measurement result of the one or more neighboring cells.

For a neighboring cell with a high-priority frequency, the terminal device may use, as a target cell, a neighboring cell with a highest-priority frequency in candidate neighboring cells that satisfy the following conditions, where the conditions include that both Srxlev and Squal of the neighboring cell satisfy corresponding thresholds respectively, and duration is greater than preset duration. The threshold is a threshold used for the neighboring cell to reselect the neighboring cell with the high-priority frequency.

If the neighboring cell is measured based on a second NCD-SSB frequency, Srxlev and Squal of the neighboring cell may be determined based on a measurement result of the neighboring cell and a power compensation value of the neighboring cell.

For example, Srxlev of the neighboring cell may satisfy the following formula: Srxlev=Qrxlevmeas-(Qrxlevmin+Qrxlevminoffset)-Pcompensation-Qoffsettemp+offset3 or Srxlev=Qrxlevmeas-(Qrxlevmin+Qrxlevminoffset)-Pcompensation-Qoffsettemp-offset3. For meanings of Qrxlevmeas, Qrxlevmin, Qrxlevminoffset, Pcompensation and Qoffsettemp, refer to the related descriptions in the foregoing descriptions of the term 3, and offset3 is the power compensation value corresponding to the neighboring cell.

Squal of the neighboring cell may satisfy the following formula: Squal=Qqualmeas-(Qqualmin+Qqualminoffset)-Qoffsettemp+offset3 or Squal=Qqualmeas-(Qqualmin+Qqualminoffset)-Qoffsettemp-offset3. For meanings of Qqualmeas, Qqualmin, Qqualminoffset and Qoffsettemp, refer to the related descriptions in the foregoing descriptions of the term 3.

If no neighboring cell with the high-priority satisfies the cell reselection conditions, the terminal device may select the target cell from neighboring cells with the same-priority frequency. A specific implementation is similar to that in S704, reference may be made to the related descriptions of S704, and details are not described herein again.

If no neighboring cell with the high-priority frequency and no neighboring cell with the same-priority frequency satisfy the cell reselection conditions, the terminal device may select the target cell from neighboring cells with the low-priority frequency. For the neighboring cell with the low-priority frequency, if both Srxlev and Squal of the first cell are less than corresponding thresholds respectively, where the threshold is a threshold used for the first cell to reselect the neighboring cell with the low-priority frequency, and both Srxlev and Squal of the neighboring cell are greater than corresponding thresholds, where the threshold is a threshold used for the neighboring cell to reselect the neighboring cell with the low-priority frequency, and duration is greater than preset duration.

For a manner of determining Srxlev and Squal of the first cell and Srxlev and Squal of the neighboring cell, refer to the foregoing manner of determining Srxlev and Squal of the neighboring cell of the high-priority frequency.

This embodiment of this application provides an NCD-SSB frequency-based measurement manner, so that when performing cell reselection in the inter-frequency neighboring cell, the terminal device can perform cell reselection based on the NCD-SSB frequency when no CD-SSB frequency is configured or cell reselection cannot be performed based on the CD-SSB frequency. This can avoid a problem that communication performance of the terminal device is poor because cell reselection cannot be performed. Therefore, according to the method provided in this embodiment of this application, flexibility of the cell reselection can be improved, and further, the communication performance of the terminal device can be improved.

In addition, the terminal device may measure the inter-frequency neighboring cell based on the NCD-SSB frequency, and the terminal device does not need to switch a BWP due to the measurement. Therefore, power consumption of the terminal device can be reduced. For example, the terminal device may directly receive paging and initiate an RACH on a BWP including the NCD-SSB frequency, instead of performing synchronization and measurement based on the CD-SSB frequency and then transferring to the BWP including the first NCD-SSB frequency to receive the paging and the RACH, so that faster access can be implemented, and frequent switching between different BWPs of the terminal device in an idle state can be reduced.

In addition, in this embodiment of this application, impact of different transmit power on the cell reselection can be reduced by using the power compensation value.

Based on a same technical concept as the method embodiments, an embodiment of this application provides a communication apparatus. A structure of the communication apparatus may be shown in FIG. 10, and the communication apparatus includes a processing module 1002 and further includes a communication module 1001.

In an implementation, the communication apparatus may be specifically configured to implement the method performed by the terminal device in embodiments in FIG. 6 to FIG. 9. The apparatus may be the terminal device, or may be a chip in the terminal device, a chip set, or a part of a chip that is configured to perform a related method function. The processing module 1002 is configured to: measure a first cell based on a first NCD-SSB frequency; measure a second cell based on the first NCD-SSB frequency and/or a CD-SSB frequency; and perform cell reselection based on a measurement result of the first cell and a measurement result of the second cell.

Optionally, the communication module 1001 is configured to receive first information from a network device, where the first information indicates that the first NCD-SSB frequency can be used for neighboring cell measurement. When measuring the first cell based on the first NCD-SSB frequency, the processing module 1002 is specifically configured to measure, based on the first information from the network device, the second cell based on the first NCD-SSB frequency.

Optionally, when measuring the second cell based on the first NCD-SSB frequency and/or the CD-SSB frequency, the processing module 1002 is specifically configured to: measure the second cell based on the first NCD-SSB frequency; determine, based on the measurement result of the second cell, that the second cell cannot be used as a target cell for reselection; and measure the second cell based on the CD-SSB frequency.

Optionally, the communication module 1001 is further configured to receive second information from a network device, where the second information indicates that a neighboring cell is measured based on the CD-SSB frequency.

For example, the communication module 1001 is configured to receive third information from a network device, where the third information indicates that neighboring cell measurement can be performed only based on the CD-SSB frequency. When measuring the second cell based on the CD-SSB frequency, the processing module 1002 is specifically configured to measure, based on the third information from the network device, the second cell based on the CD-SSB frequency.

Optionally, the processing module 1002 is further configured to: before the second cell is measured based on the first NCD-SSB frequency and/or the CD-SSB frequency, determine that the measurement result of the first cell satisfies a threshold corresponding to the first NCD-SSB frequency. The threshold corresponding to the first NCD-SSB frequency is configured by the network device, or the threshold corresponding to the first NCD-SSB frequency is determined based on a threshold corresponding to the CD-SSB frequency and a power compensation value of the first cell.

Optionally, when performing cell reselection based on the measurement result of the first cell and the measurement result of the second cell, the processing module 1002 is specifically configured to: determine an R value of the first cell based on the measurement result of the first cell; determine an R value of the second cell based on the measurement result of the second cell; and perform cell reselection based on the R value of the first cell and the R value of the second cell.

Optionally, when determining the R value of the first cell based on the measurement result of the first cell, the processing module 1002 is specifically configured to determine the R value of the first cell based on the measurement result of the first cell and the power compensation value of the first cell.

Optionally, when determining the R value of the second cell based on the measurement result of the second cell, the processing module 1002 is specifically configured to determine the R value of the second cell based on the measurement result of the second cell and a power compensation value of the second cell.

In an implementation, the communication apparatus may be specifically configured to implement the method performed by the network device in embodiments in FIG. 6 to FIG. 9. The apparatus may be the network device, or may be a chip in the network device, a chip set, or a part of a chip that is configured to perform a related method function. The processing module 1002 is configured to determine indication information based on a configuration of an NCD-SSB frequency of a second cell of a terminal device, where the indication information indicates that a first NCD-SSB frequency and/or a CD-SSB frequency are/is used by the terminal device to measure the second cell, and the terminal device camps on a first cell in an idle state or an inactive state. The communication module 1001 is configured to send the indication information to the terminal device.

Optionally, the communication module 1001 is further configured to send fourth information and/or fifth information to the terminal device, where the fourth information indicates a power compensation value of the first cell, and the fifth information indicates a power compensation value of the second cell.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that for functions or implementations of the modules in embodiments of this application, further refer to the related descriptions in the method embodiments.

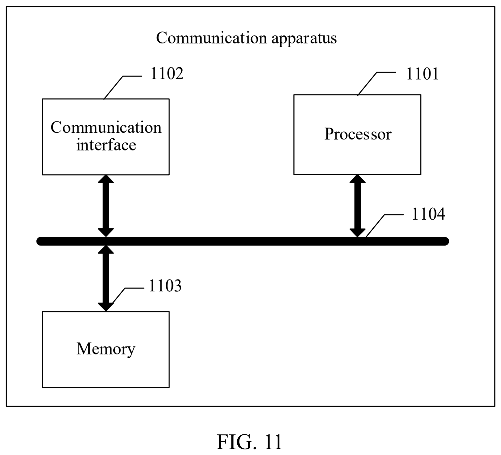

In a possible manner, the communication apparatus may be shown in FIG. 11. The apparatus may be a communication device or a chip in a communication device. The communication device may be the terminal device in the foregoing embodiments or the network device in the foregoing embodiments. The apparatus includes a processor 1101 and a communication interface 1102, and may further include a memory 1103. The processing module 1002 may be the processor 1101. The communication module 1001 may be the communication interface 1102.

The processor 1101 may be a CPU, a digital processing unit, or the like. The communication interface 1102 may be a transceiver, an interface circuit such as a transceiver circuit, a transceiver chip, or the like. The apparatus further includes the memory 1103, configured to store a program executed by the processor 1101. The memory 1103 may be a non-volatile memory such as a hard disk drive (hard disk drive, HDD) or a solid-state drive (solid-state drive, SSD), or may be a volatile memory (volatile memory) such as a random access memory (random access memory, RAM). The memory 1103 is any other medium that can be used to carry or store expected program code in a form of an instruction or a data structure and that can be accessed by a computer, but is not limited thereto.

The processor 1101 is configured to execute the program code stored in the memory 1103, and is specifically configured to perform an action of the processing module 1002. Details are not described herein in this application. The communication interface 1102 is specifically configured to perform an action of the communication module 1001. Details are not described herein again in this application.

A specific connection medium between the communication interface 1102, the processor 1101, and the memory 1103 is not limited in this embodiment of this application. In this embodiment of this application, the memory 1103, the processor 1101, and the communication interface 1102 are connected through a bus 1104 in FIG. 11. The bus is represented by using a bold line in FIG. 11. A manner of a connection between other components is merely an example for description, and is not limited thereto. Buses may be classified into an address bus, a data bus, a control bus, and the like. For ease of representation, only one bold line is used to represent the bus in FIG. 11, but this does not mean that there is only one bus or only one type of bus.

An embodiment of this application further provides a computer-readable storage medium, configured to store computer software instructions that need to be performed by the foregoing processor. The computer software instructions include a program that needs to be performed by the foregoing processor.

An embodiment of this application further provides a communication system. The communication system includes a communication apparatus configured to implement a function of the terminal device in the embodiment in FIG. 6 and a communication apparatus configured to implement a function of the network device in the embodiment in FIG. 6.

An embodiment of this application further provides a communication system. The communication system includes a communication apparatus configured to implement a function of the terminal device in the embodiment in FIG. 8 and a communication apparatus configured to implement a function of the network device in the embodiment in FIG. 8.

Further embodiments of the present invention are provided in the following. It should be noted that the numbering used in the following section does not necessarily need to comply with the numbering used in the previous sections.

Embodiment 1. A communication method, wherein the method is applied to a terminal device, the terminal device camps on a first cell in an idle state or an inactive state, and the method comprises:
measuring, by the terminal device, the first cell based on a first non-cell defining synchronization signal/physical broadcast channel block NCD-SSB frequency;
measuring, by the terminal device, a second cell based on the first NCD-SSB frequency and/or a cell defining synchronization signal/physical broadcast channel block CD-SSB frequency; and
performing, by the terminal device, cell reselection based on a measurement result of the first cell and a measurement result of the second cell.

Embodiment 2. The method according to embodiment 1, wherein the measuring, by the terminal device, a second cell based on the first NCD-SSB frequency comprises:
measuring, by the terminal device based on first information from a network device, the second cell based on the first NCD-SSB frequency, wherein the first information indicates that the first NCD-SSB frequency can be used for neighboring cell measurement.

Embodiment 3. The method according to embodiment 1, wherein the measuring, by the terminal device, a second cell based on the first NCD-SSB frequency and a CD-SSB frequency comprises:
measuring, by the terminal device, the second cell based on the first NCD-SSB frequency;
determining, by the terminal device based on the measurement result of the second cell, that the second cell cannot be used as a target cell for reselection; and
measuring, by the terminal device, the second cell based on the CD-SSB frequency.

Embodiment 4. The method according to embodiment 3, wherein before the measuring, by the terminal device, the second cell based on the first NCD-SSB frequency, the method further comprises:
receiving, by the terminal device, second information from a network device, wherein the second information indicates that a neighboring cell is measured based on the CD-SSB frequency.

Embodiment 5. The method according to embodiment 1, wherein the measuring, by the terminal device, a second cell based on a CD-SSB frequency comprises:
measuring, by the terminal device based on third information from a network device, the second cell based on the CD-SSB frequency, wherein the third information indicates that neighboring cell measurement can be performed only based on the CD-SSB frequency.

Embodiment 6. The method according to any one of embodiments 1 to 5, wherein before the measuring, by the terminal device, a second cell based on the first NCD-SSB frequency and/or a cell defining synchronization signal/physical broadcast channel block CD-SSB frequency, the method further comprises:
determining, by the terminal device, that the measurement result of the first cell satisfies a threshold corresponding to the first NCD-SSB frequency, wherein the threshold corresponding to the first NCD-SSB frequency is configured by the network device, or the threshold corresponding to the first NCD-SSB frequency is determined based on a threshold corresponding to the CD-SSB frequency and a power compensation value of the first cell.

Embodiment 7. The method according to any one of embodiments 1 to 6, wherein the performing, by the terminal device, cell reselection based on a measurement result of the first cell and a measurement result of the second cell comprises:
determining, by the terminal device, an R value of the first cell based on the measurement result of the first cell;
determining, by the terminal device, an R value of the second cell based on the measurement result of the second cell; and
performing, by the terminal device, cell reselection based on the R value of the first cell and the R value of the second cell.

Embodiment 8. The method according to embodiment 7, wherein the determining, by the terminal device, an R value of the first cell based on the measurement result of the first cell comprises:
determining, by the terminal device, the R value of the first cell based on the measurement result of the first cell and the power compensation value of the first cell.

Embodiment 9. The method according to embodiment 7 or 8, wherein the determining, by the terminal device, an R value of the second cell based on the measurement result of the second cell comprises:
determining, by the terminal device, the R value of the second cell based on the measurement result of the second cell and a power compensation value of the second cell.

Embodiment 10. A communication method, comprising:
determining, by a network device, indication information based on a configuration of a non-cell defining synchronization signal/physical broadcast channel block NCD-SSB frequency of a second cell, wherein the indication information indicates that a first NCD-SSB frequency and/or a cell defining synchronization signal/physical broadcast channel block CD-SSB frequency are/is used by a terminal device to measure the second cell, and the terminal device camps on a first cell in an idle state or an inactive state; and
sending, by the network device, the indication information to the terminal device.

Embodiment 11. The method according to embodiment 10, wherein that the indication information indicates that a first NCD-SSB frequency is used by a terminal device to measure the second cell specifically comprises: the indication information indicates that the first NCD-SSB frequency can be used for neighboring cell measurement;
that the indication information indicates that a first NCD-SSB frequency and a CD-SSB frequency are used by a terminal device to measure the second cell specifically comprises: the indication information indicates that a neighboring cell is measured based on the CD-SSB frequency; or
that the indication information indicates that a CD-SSB frequency is used by a terminal device to measure the second cell specifically comprises: the indication information indicates that neighboring cell measurement can be performed only based on the CD-SSB frequency.

Embodiment 12. The method according to embodiment 10 or 11, wherein the method further comprises:
sending, by the network device, fourth information and/or fifth information to the terminal device, wherein the fourth information indicates a power compensation value of the first cell, and the fifth information indicates a power compensation value of the second cell.

Embodiment 13. A communication apparatus, wherein the apparatus is used in a terminal device, the terminal device camps on a first cell in an idle state or an inactive state, and the apparatus comprises:
a processing module, configured to: measure the first cell based on a first non-cell defining synchronization signal/physical broadcast channel block NCD-SSB frequency;
measure a second cell based on the first NCD-SSB frequency and/or a cell defining synchronization signal/physical broadcast channel block CD-SSB frequency; and
perform cell reselection based on a measurement result of the first cell and a measurement result of the second cell.

Embodiment 14. The apparatus according to embodiment 13, further comprising a communication module, wherein
the communication module is configured to receive first information from a network device, wherein the first information indicates that the first NCD-SSB frequency can be used for neighboring cell measurement; and
when measuring the first cell based on the first NCD-SSB frequency, the processing module is specifically configured to:
   measure, based on the first information, the second cell based on the first NCD-SSB frequency.

Embodiment 15. The apparatus according to embodiment 13, wherein when measuring the second cell based on the first NCD-SSB frequency and/or the CD-SSB frequency, the processing module is specifically configured to:
measure the second cell based on the first NCD-SSB frequency;
determine, based on the measurement result of the second cell, that the second cell cannot be used as a target cell for reselection; and
measure the second cell based on the CD-SSB frequency.

Embodiment 16. The apparatus according to embodiment 15, further comprising a communication module, wherein
the communication module is configured to receive second information from a network device, wherein the second information indicates that a neighboring cell is measured based on the CD-SSB frequency.

Embodiment 17. The apparatus according to embodiment 13, further comprising a communication module, wherein
the communication module is configured to receive third information from a network device, wherein the third information indicates that neighboring cell measurement can be performed only based on the CD-SSB frequency; and
when measuring the second cell based on the CD-SSB frequency, the processing module is specifically configured to:
   measure, based on the third information, the second cell based on a signal received by the communication module on the CD-SSB frequency.

Embodiment 18. The apparatus according to any one of embodiments 13 to 17, wherein the processing module is further configured to:
before the second cell is measured based on the first NCD-SSB frequency and/or the CD-SSB frequency, determine that the measurement result of the first cell satisfies a threshold corresponding to the first NCD-SSB frequency, wherein the threshold corresponding to the first NCD-SSB frequency is configured by the network device, or the threshold corresponding to the first NCD-SSB frequency is determined based on a threshold corresponding to the CD-SSB frequency and a power compensation value of the first cell.

Embodiment 19. The apparatus according to any one of embodiments 13 to 18, wherein when performing cell reselection based on the measurement result of the first cell and the measurement result of the second cell, the processing module is specifically configured to:
determine an R value of the first cell based on the measurement result of the first cell;
determine an R value of the second cell based on the measurement result of the second cell; and
perform cell reselection based on the R value of the first cell and the R value of the second cell.

Embodiment 20. The apparatus according to embodiment 19, wherein when determining the R value of the first cell based on the measurement result of the first cell, the processing module is specifically configured to:
determine the R value of the first cell based on the measurement result of the first cell and the power compensation value of the first cell.

Embodiment 21. The apparatus according to embodiment 19 or 20, wherein when determining the R value of the second cell based on the measurement result of the second cell, the processing module is specifically configured to:
determine the R value of the second cell based on the measurement result of the second cell and a power compensation value of the second cell.

Embodiment 22. A communication apparatus, comprising:
a processing module, configured to determine indication information based on a configuration of a non-cell defining synchronization signal/physical broadcast channel block NCD-SSB frequency of a second cell, wherein the indication information indicates that a first NCD-SSB frequency and/or a cell defining synchronization signal/physical broadcast channel block CD-SSB frequency are/is used by a terminal device to measure the second cell, and the terminal device camps on a first cell in an idle state or an inactive state; and
a communication module, configured to send the indication information to the terminal device.

Embodiment 23. The apparatus according to embodiment 22, wherein that the indication information indicates that a first NCD-SSB frequency is used by a terminal device to measure the second cell specifically comprises: the indication information indicates that the first NCD-SSB frequency can be used for neighboring cell measurement;
that the indication information indicates that a first NCD-SSB frequency and a CD-SSB frequency are used by a terminal device to measure the second cell specifically comprises: the indication information indicates that a neighboring cell is measured based on the CD-SSB frequency; or
that the indication information indicates that a CD-SSB frequency is used by a terminal device to measure the second cell specifically comprises: the indication information indicates that neighboring cell measurement can be performed only based on the CD-SSB frequency.

Embodiment 24. The apparatus according to embodiment 22 or 23, wherein the communication module is further configured to:
send fourth information and/or fifth information to the terminal device, wherein the fourth information indicates a power compensation value of the first cell, and the fifth information indicates a power compensation value of the second cell.

Embodiment 25. A computer-readable storage medium, wherein the computer-readable storage medium is configured to store computer instructions; and when the computer instructions are run on a computer, the computer is enabled to perform the method according to any one of embodiments 1 to 9 or the method according to any one of embodiments 10 to 12.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

## Claims

1. A communication method, the terminal device camps on a first cell in an idle state or an inactive state, and the method comprises:
measuring, the first cell based on a first non-cell defining synchronization signal/physical broadcast channel block, NCD-SSB, frequency;
measuring, a second cell based on the first NCD-SSB frequency and/or a cell defining synchronization signal/physical broadcast channel block, CD-SSB, frequency; and
performing, cell reselection based on a measurement result of the first cell and a measurement result of the second cell.

2. The method according to claim 1, wherein the measuring, a second cell based on the first NCD-SSB frequency comprises:
measuring, based on first information from a network device, the second cell based on the first NCD-SSB frequency, wherein the first information indicates that the first NCD-SSB frequency can be used for neighboring cell measurement.

3. The method according to claim 1, wherein the measuring, a second cell based on the first NCD-SSB frequency and a CD-SSB frequency comprises:
measuring, the second cell based on the first NCD-SSB frequency;
determining, based on the measurement result of the second cell, that the second cell cannot be used as a target cell for reselection; and
measuring, the second cell based on the CD-SSB frequency.

4. The method according to claim 3, wherein before the measuring, the second cell based on the first NCD-SSB frequency, the method further comprises:
receiving, second information from a network device, wherein the second information indicates that a neighboring cell is measured based on the CD-SSB frequency.

5. The method according to claim 1, wherein the measuring, a second cell based on a CD-SSB frequency comprises:
measuring, based on third information from a network device, the second cell based on the CD-SSB frequency, wherein the third information indicates that neighboring cell measurement can be performed only based on the CD-SSB frequency.

6. The method according to any one of claims 1 to 5, wherein before the measuring, a second cell based on the first NCD-SSB frequency and/or a CD-SSB frequency, the method further comprises:
determining, that the measurement result of the first cell satisfies a threshold corresponding to the first NCD-SSB frequency, wherein the threshold corresponding to the first NCD-SSB frequency is configured by the network device, or the threshold corresponding to the first NCD-SSB frequency is determined based on a threshold corresponding to the CD-SSB frequency and a power compensation value of the first cell.

7. The method according to any one of claims 1 to 6, wherein the performing, cell reselection based on a measurement result of the first cell and a measurement result of the second cell comprises:
determining, an R value of the first cell based on the measurement result of the first cell;
determining, an R value of the second cell based on the measurement result of the second cell; and
performing, cell reselection based on the R value of the first cell and the R value of the second cell.

8. The method according to claim 7, wherein the determining, an R value of the first cell based on the measurement result of the first cell comprises:
determining, the R value of the first cell based on the measurement result of the first cell and the power compensation value of the first cell.

9. The method according to claim 7 or 8, wherein the determining, an R value of the second cell based on the measurement result of the second cell comprises:
determining, the R value of the second cell based on the measurement result of the second cell and a power compensation value of the second cell.

10. A communication method, comprising:
determining, indication information based on a configuration of a non-cell defining synchronization signal/physical broadcast channel block, NCD-SSB, frequency of a second cell, wherein the indication information indicates that a first NCD-SSB frequency and/or a cell defining synchronization signal/physical broadcast channel block, CD-SSB, frequency are/is used by a terminal device to measure the second cell, and the terminal device camps on a first cell in an idle state or an inactive state; and
sending, the indication information to the terminal device.

11. The method according to claim 10, wherein that the indication information indicates that a first NCD-SSB frequency is used by a terminal device to measure the second cell specifically comprises: the indication information indicates that the first NCD-SSB frequency can be used for neighboring cell measurement;
that the indication information indicates that a first NCD-SSB frequency and a CD-SSB frequency are used by a terminal device to measure the second cell specifically comprises: the indication information indicates that a neighboring cell is measured based on the CD-SSB frequency; or
that the indication information indicates that a CD-SSB frequency is used by a terminal device to measure the second cell specifically comprises: the indication information indicates that neighboring cell measurement can be performed only based on the CD-SSB frequency.

12. The method according to claim 10 or 11, wherein the method further comprises:
sending, fourth information and/or fifth information to the terminal device, wherein the fourth information indicates a power compensation value of the first cell, and the fifth information indicates a power compensation value of the second cell.

13. A communication apparatus, configured to perform the method according to any one of claims 1 to 9.

14. A communication apparatus, configured to perform the method according to any one of claims 10 to 12.

15. A computer-readable storage medium, wherein the computer-readable storage medium is configured to store computer instructions; and when the computer instructions are run on a computer, the computer is enabled to perform the method according to any one of claims 1 to 9 or the method according to any one of claims 10 to 12.
